# EUROPEAN PATENT APPLICATION

(11) **EP 4 343 081 A1**
(43) Date of publication of application: **27.03.2024**
(21) Application number: 23020422.4
(22) Date of filing: 07.09.2023
(51) Int. Cl.: E04H 6/02, E04B 1/34, F24S 25/12, H02S 20/30

(54) **PILLAR PARTICULARLY FOR CANOPIES**

(30) Priority: 23.09.2022 CZ 20220401
(71) Applicant: EGE Power System, s.r.o., 370 01 Ceské Budejovice (CZ)
(72) Inventor: Radek, Zatloukal, 77900 Olomouc, Hodolany (CZ)
(74) Representative: Soukup, Petr

(57) **Abstract**

A pillar comprising a foundation element (101), a base (1) anchored to the foundation element and a support column (2) attached to the foundation element, on which a positionable arm (3) is mounted, the essence of which invention is that the base (1) is anchored to the foundation element (101) in a dismountable method and that the support column is also attached to the base (1) in a dismountable method, while the top end area of the support column (2) has a mounting cavity (23) open from the top, into which the rear end part of an adjustable arm (3) is inserted, the adjustable arm (3) being positionally adjustable on both sides within the mounting cavity (23). A pin (25) is disposed transversely across the mounting cavity (23) in a horizontal position at the bottom thereof and at least one bottom open cut-out (35) is formed transversely across the rear end part of the adjustable arm (3), the inner radius of which corresponds to the outer radius of the pin (25) with which it forms a complementary pair for swinging the adjustable arm (3) in the mounting cavity (23)

## Description

### Technical Field

The invention falls within the area of building structures and relates to a pillar particularly for canopies.

### Background Art

In recent decades, the production of electricity from so-called renewable energy sources has become increasingly important. One option is to obtain it from sunlight through photovoltaic panels. These can be installed on any free surface, which may, however, result in the development and thus in the degradation of land stock. Nowadays, solar panel assemblies are increasingly being used on the roofs of houses or buildings or other canopies near residential or industrial buildings.

There is a number of known solutions for the installation of photovoltaic panels using structures originally designed to cover partially or fully open spaces, such as bus stops or carports covering parking spaces and similar types of structures for other purposes, such as storage of materials. Fitting bus stops with photovoltaic panels is described, for example, in files CN203961345U, CN110424776A, CN203383532U, CN103452340A, CN112523555A, CN103850450A, where these are fixed structures without the possibility of adjusting the orientation of the panel surface to the sunlight. File KR20200099854A shows a canopy that allows variable adjustment of the panel tilt according to the direction of sunlight. However, this is a solution with fixed side walls, limiting the use of the roofed area. Document EP2508694A1 describes the design of a covered parking space where the roof area is fitted with a solar panel assembly. The disadvantage of this solution is a concrete foundation above ground level, which limits the accessibility of the parking area. Side support columns are fixed in the concrete foundation, however, they are not adjustable. This concrete foundation, together with a steel side structure, is located in the area of doors of a parked automobile, which makes opening the doors significantly more difficult and takes up too much space around the vehicle. Furthermore, the solar panel assembly is placed on the roofing layer in this embodiment, so the solar panels do not form a separate roof cover layer. Therefore, it is not possible to change the slope and height of the cover layer without adjusting the lengths of the support pairs. Another design with an adjustable top is described in file US7531741B1. Here, the axis of rotation for changing the inclination of the roof section is located in the centre of its centre of gravity and furthermore, this embodiment does not eliminate the above-mentioned problem with the location of the side support leg in the door area of a possibly parked vehicle under the structure.

The aim of the present invention is to present a variable load-bearing structural element, a pillar, in particular for canopies, usable for example for car parking, which allows to change the inclination of the roofing part, without structural modifications, while maintaining the required static loading demands.

### Summary of the Invention

The set aim is achieved by an invention, which is a pillar comprising a foundation element, a base anchored to the foundation element and a support column attached to the foundation element, on which a positionable arm is mounted, the essence of which is that the base is anchored to the foundation element in a dismountable manner and that the support column is also attached to the base in a dismountable manner, while the top end area of the support column has a mounting cavity open from the top, into which the rear end part of an adjustable arm is inserted, the adjustable arm being positionally adjustable on both sides within the mounting cavity. A pin is seated transversely across the mounting cavity in its bottom part, in a horizontal position, and at least one bottom open cut-out is formed transversely across the rear end part of the adjustable arm, the inner radius of which corresponds to the outer radius of the pin, with which it forms a complementary pair for swinging the adjustable arm in the mounting cavity.

In the preferred embodiment, transverse through mounting holes are formed in the support column in the mounting cavity area and transverse through arm holes are formed in the rear end area of the positionally adjustable arm, the position of which corresponds to the position of the mounting holes for seating the fixing elements.

It is further beneficial if a longitudinal gap, open from above, is formed in the positionable arm, in the upper part of which a longitudinal support profile is embedded for fixing the transverse ladder-type profiles, while the transverse ladder-type profiles are adapted for fixing the photovoltaic panels.

Finally, it is beneficial if transverse through sidewall openings are formed in the side walls of the positionable arm gap and longitudinal sideways open fixing cavities are formed in the bottom of the support profile, in which shaped inserts are provided for fixing the support elements that are inserted into the sidewall openings.

The present invention achieves a novel and superior effect in that the foundation element of the pillar does not rise above ground level, thereby increasing the variability of vehicle parking. It is further possible to change the slope of the roofing without interfering with the structure, while tilting it adequately can increase the efficiency of the photovoltaic panels, forming the actual roof layer. The dismountable connection of the base to both the support column and the foundation element allows an adjustment of the height of the entire structure by replacing the base.

### Description of Drawings

Specific examples of the invention embodiments are shown in the accompanying drawings which present:
- Fig. 1: an overall side view of the assembled pillar,
- Fig. 2: an exploded slant view of the upper two parts of the pillar from the back from above,
- Fig. 3: an exploded detail view of the mutually adjacent end parts of the adjustable arm and the support column,
- Fig. 4: a detailed front slanted view of the pin location in the upper end area of the support column,
- Fig. 5: a detail of the end regions of the adjustable arm and the support column connected at the upper limit position of the adjustable arm,
- Fig. 6: a detail of the end regions of the adjustable arm and the support column connected at the lower limit position of the adjustable arm,
- Fig. 7: a side view of the pillar showing the two extreme positions of inclination of the adjustable arm with a drawing of the lower foundation leg,
- Fig. 8: an exploded detail view of an alternative embodiment of the connection area of the adjustable arm and the upper end area of the support column,
- Fig. 9: a detail view of the bearing rail positioning in the adjustable arm from above, aslant,
- Fig. 10: an enlarged detail view of the bearing rail positioning in the adjustable arm from Fig. 7,
- Fig. 11: a front view of the bearing rail positioning in the adjustable arm in section view, and
- Fig. 12: an axonometric view of the pillar assembly with roofing.

The drawings illustrating the present invention and the following examples of a particular embodiment do not in any way limit the scope of protection stipulated in the definition, but merely illustrate the principle of the invention.

### Examples of Invention Embodiments

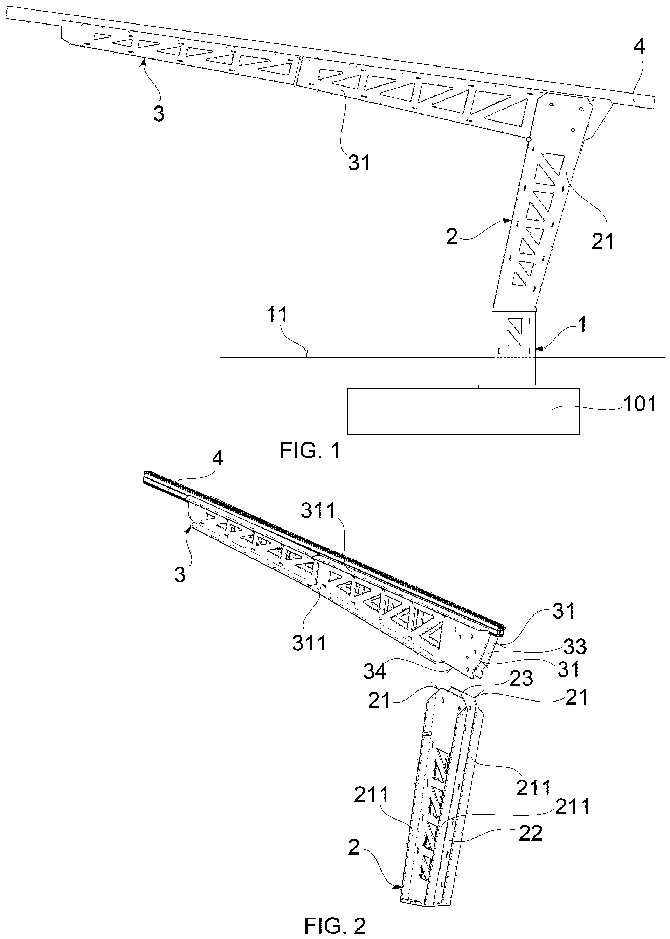

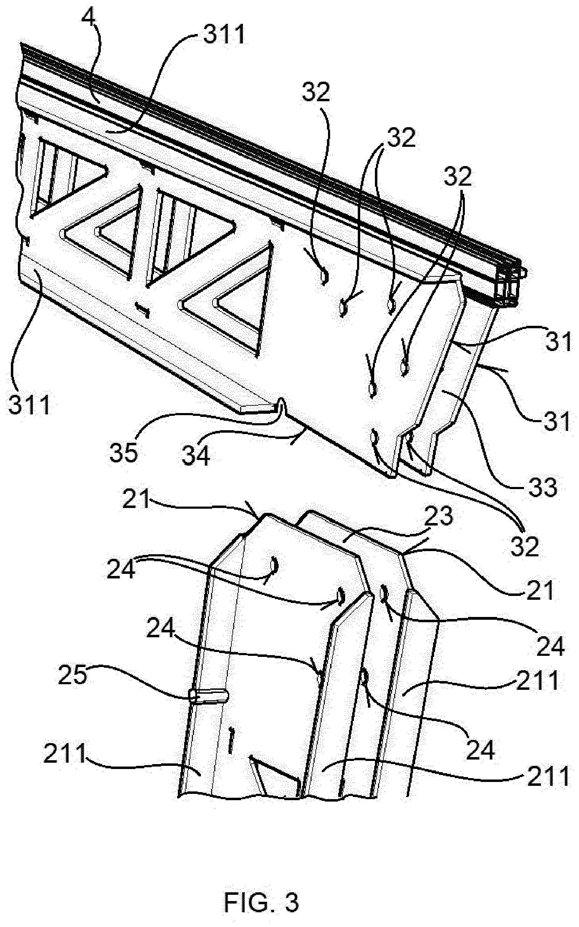

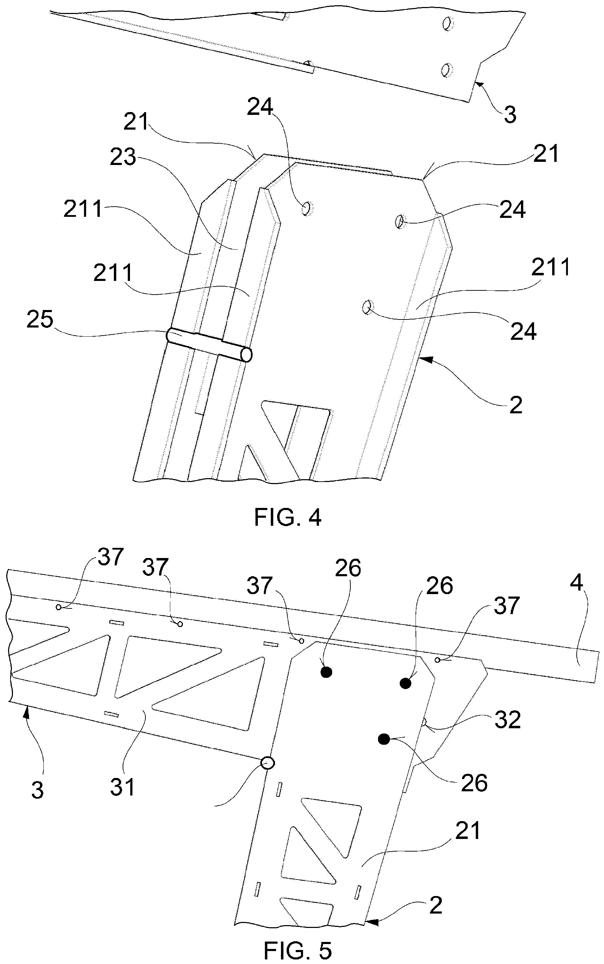

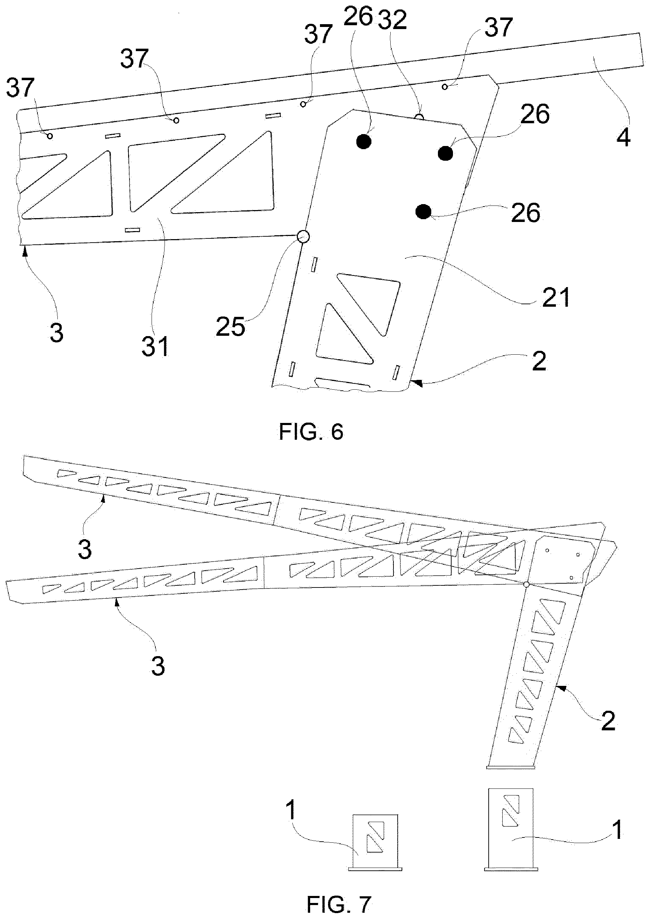

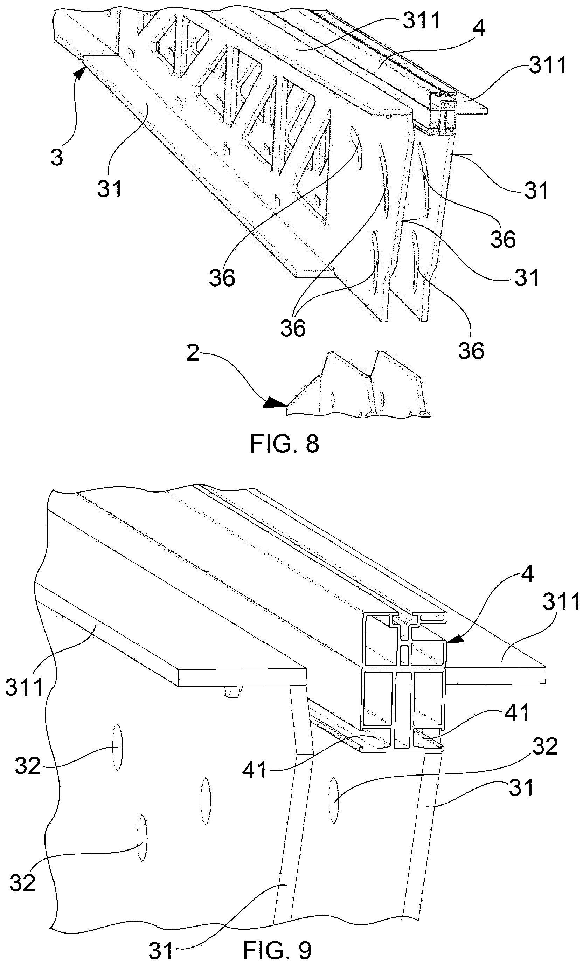

The pillar in the basic embodiment shown in Fig. 1 comprises an interlocking base 1, a support column 2 and an adjustable arm 3. Base 1 is anchored below the ground level 11, in a dismountable manner, to the foundation element 101, preferably embodied as a concrete block or pile. Support column 2 is preferably connected to base 1 in a dismountable manner. As illustrated in Fig. 2 and Fig. 3, support column 2 is formed by two vertical flat mutually parallel column sidewalls 21, transversely connected by undisplayed cross members running transversely through a column gap 22 that is located between the column sidewalls 21. The longitudinal edges of the column sidewalls 21 are provided with collars 211 formed by bending the column sidewalls 21 into an L-shape outside the supporting column 2. In the upper end part of the support column 2, the column gap 22 is not guided by the cross members, thereby creating an assembly cavity 23 which is open from above and provides passage in front-to-rear direction. In the area of the mounting cavity 23, mounting holes 24 are formed in the column sidewalls 21. According to the illustrations of Fig. 1 to Fig. 3, the positionable arm 3 comprises two flat, mutually parallel arm sidewalls 31, the surfaces of which are parallel to the plane of the surfaces of the column sidewalls 21. The arm sidewalls 31 are transversely connected by non-displayed braces running transversely across the gap 33 situated between the arm sidewalls 31, while the spacing of the outer surfaces of the arm sidewalls 31 corresponds to the spacing of the inner surfaces of the column sidewalls 21. The longitudinal edges of the arm sidewalls 31 are provided with rails 311, formed by bending the arm sidewalls 31 into an L-shape outside the positionable arm 3. Below the upper rails 311, sidewall openings 37 are formed in the shoulder sidewalls 31 along their entire length, as shown in Fig. 5. The bottom rails 311 are terminated at a distance from the ends of the shoulder sidewalls 31 adjacent to the support column 2, which corresponds to at least the width of the upper end part of the column beam 2 in the area of its mounting cavity 23, thus allowing the rear end area of the positionable arm 3 to be inserted into the mounting cavity 23 of the support column 2. The shoulder sidewalls 31 are terminated in this area on their lower longitudinal side by mounting edges 34. In the lower part of the mounting cavity 23, between the column sidewalls 21 in an axis perpendicular to their surface, the support column 2 is fitted with pin 25, which is fixed in the collar bodies 211 adjacent to the lower rails 311 of the adjustable arm 3, as indicated in Figure 4. In the mounting edges 34, semicircular cutouts 35 are formed in their end regions adjacent to the bottom rails 311, the inner radius of which corresponds to the outer radius of pin 25, with which the cut-outs form a complementary pair, so that when the end region of the positionable arm 3 is inserted into the mounting cavity 23, the pin 25 is engaged in the semicircular cut-outs 35. Thus, the support column 2 and the adjustable arm 3 are coupled to each other in a swinging manner. In the end regions of the shoulder sidewalls 31 adjacent to the support column 2, shoulder openings 32 are formed, whose position in swinging movement of the positionable arm 3 relative to the support column 2 corresponds successively to the position of the mounting holes 24, while the shoulder openings 32 are formed in such a way that their line-up with the mounting holes 24 is always achieved at different angles of the positionable arm 3 relative to the support column 2. As illustrated in Fig. 5 and 6, when the arm holes 32 and the mounting holes 24 are mutually lined up, the fixing elements 26, preferably a bolt or a rivet, are seated therein to establish the position of the adjustable arm 3 relative to the support column 2. This enables to change and fix the relative inclination between the support column 2 and the adjustable arm 3, thus ensuring the bilateral adjustability of the adjustable arm 3, as indicated in Fig. 5 to 7. The described embodiment is not the only possible solution. In the end region of the positionable arm 3 inserted in the mounting cavity 23, in the alternative embodiment indicated in Fig. 8, the arm holes 32 are replaced by cutouts 36 which are lined up with the mounting holes 24. The fixation of the position of the adjustable arm 3 is then achieved by a fixed bolt connection, whereby the inclination of the adjustable arm 3 can be changed continuously. Another alternative is to place the foundation element 101 so that the base 1 is anchored to it at or above ground level.

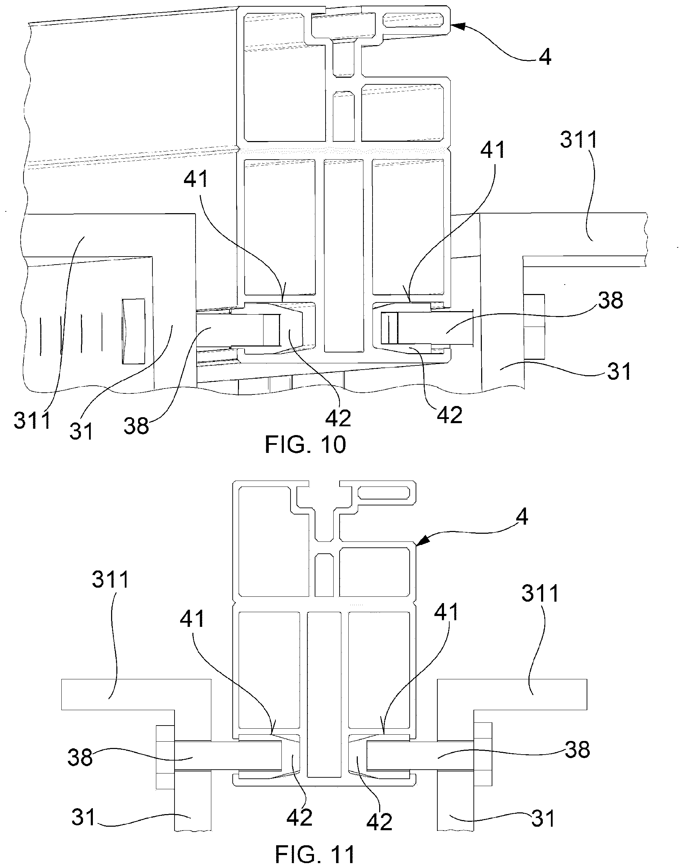

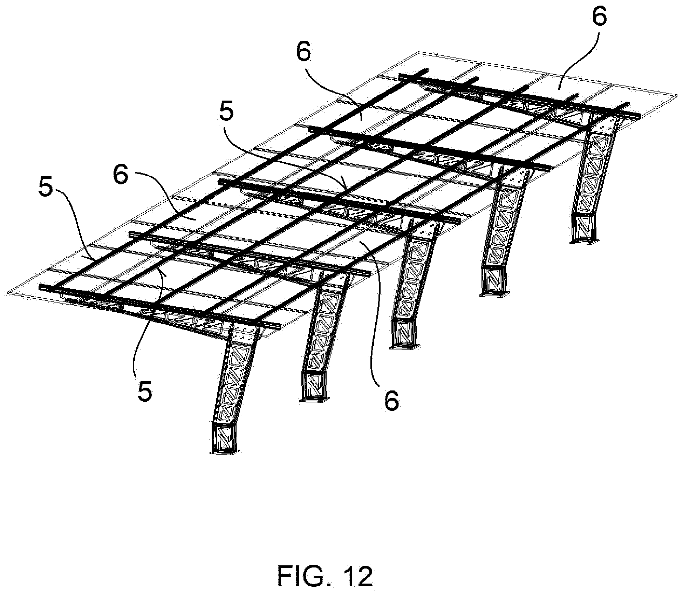

A longitudinal support profile 4 is provided at the top of the gap 33, as indicated in Figure 3 and Figures 9 to 11. In the lower part of the support profile 4, longitudinal laterally open fixing cavities 41 are formed in the sides thereof, in which the shaped inserts 42, into which the support elements 38, preferably embodied in the form of bolts, are inserted, passing through the sidewall openings 37 in which they are fixed, as indicated in Fig. 10 and 11. As outlined in Fig. 12, the support profiles 4 are supported transversely by the ladder-type profiles 5 on which photovoltaic panels 6 are mounted.

### Industrial Applicability

The supporting pillar can be used particularly for building canopies for various purposes, for example for roofing car parking spaces and is usable for fixing photovoltaic panels.

## Claims

1. A pillar comprising a foundation element (101), a base (1) anchored to the foundation element and a support column (2) attached to the foundation element, on which a positionable arm (3) is mounted, **characterized in that** the base (1) is anchored to the foundation element (101) in a dismountable method and that the support column (2) is also attached to the base (1) in a dismountable method, while the top end area of the support column has a mounting cavity (23) open from the top, into which the rear end part of an adjustable arm (3) is inserted, the adjustable arm (3) being positionally adjustable on both sides within the mounting cavity (23), where a pin (25) is disposed transversely across the mounting cavity (23) in a horizontal position at the bottom thereof and at least one bottom open cut-out (35) is formed transversely across the rear end part of the adjustable arm (3), the inner radius of which corresponds to the outer radius of the pin (25) with which it forms a complementary pair for swinging the adjustable arm (3) in the mounting cavity (23).

2. The pillar according to claim 1, **characterized in that** transverse through mounting holes (24) are formed in the support column (2) in the mounting cavity (23) area and transverse through arm openings (32) are formed in the rear end area of the positionally adjustable arm (3), the position of which corresponds to the position of the mounting holes (24) for seating the fixing elements (26)..

3. Pillar according to any one of claims 1 or 2, **characterized in that** a longitudinal gap (33), open from above, is formed in the positionable arm (3), in the upper part of which a longitudinal bearing profile (4) is arranged for fixing the transverse ladder-type profiles (5).

4. Pillar according to claim 3, **characterized in that** the transverse ladder-type profiles (5) are adapted for mounting photovoltaic panels (6).

5. Pillar according to claim 3, **characterized in that** transverse through sidewall openings (37) are formed in the sidewalls of the positionable arm (3) gap (33) and longitudinal sideways open fixing cavities (41) are formed in the bottom of the support profile (4), in which shaped inserts (42) are provided for fixing the support elements (38) that are inserted into the sidewall openings (37).
